# EUROPÄISCHE PATENTSCHRIFT

(11) **EP 3 633 877 B1**
(45) Veröffentlichungstag und Bekanntmachung des Hinweises auf die Patenterteilung: **24.03.2021**
(21) Anmeldenummer: 19200901.7
(22) Anmeldetag: 01.10.2019
(51) Int. Cl.: H04B 10/071, G01M 11/08, G01M 11/00

(54) **VERFAHREN ZUR DETEKTION VON DISKONTINUITÄTEN IN EINEM OPTISCHEN KANAL, INSBESONDERE BEI EINER GLASFASERLEITUNG**
METHOD FOR DETECTING DISCONTINUITIES IN AN OPTICAL CHANNEL, ESPECIALLY IN A FIBRE OPTIC LINE
PROCÉDÉ DE DÉTECTION DES DISCONTINUITÉS DANS UN CANAL OPTIQUE, EN PARTICULIER DANS UNE CONDUITE EN FIBRE DE VERRE

(30) Priorität: 03.10.2018 AT 508472018
(43) Veröffentlichungstag der Anmeldung: 08.04.2020
(73) Patentinhaber: AIT Austrian Institute of Technology GmbH, 1210 Wien (AT)
(72) Erfinder: SCHRENK, Bernhard, 2122 Ulrichskirchen (AT)
(74) Vertreter: Wildhack & Jellinek

(56) Entgegenhaltungen:
- EP-A1- 3 312 582
- CN-A- 104 980 225

## Beschreibung

Die Erfindung betrifft ein Verfahren sowie eine Vorrichtung zur Detektion von Diskontinuitäten in einem optischen Kanal, insbesondere einer Glasfaserleitung.

Die EP 3312582 A1 offenbart ein optisches Time-Domain-Reflektometer zur Bestimmung von Eigenschaften einer optischen Faser. Das Reflektometer umfasst einen Elektroabsorptionsmodulator mit einem Wellenleiter und zwei Elektroden, sowie einer Lichtquelle, die Testlicht in den Wellenleiter abgibt. Der Wellenleiter ist an die Faser und die Lichtquelle angeschlossen. Eine Steuereinheit steuert die Lichtquelle und eine Modulationsspannung zwischen den Elektroden. Der Elektroabsorptionsmodulator empfängt reflektiertes Licht, das von der Reflexion des Testlichts in der Faser stammt, wobei ein Photostrom zwischen den Elektroden entsteht.

Aus der CN 104980225 A ist ein optisches Modul für In-band-transparent-Transmission von Monitoringsignalen basierend auf Amplitudenmodulation bekannt, das einen Laser, einen Elektroabsorptionmodulator, eine Avalanche-Photodiode, einen Transkonduktanzverstärker und einen Limiting-Verstärker umfasst.

Aus dem Stand der Technik ist eine Vielzahl von unterschiedlichen Prüfverfahren bekannt, mit denen Störungen in Glasfasernetzen auf einfache Weise aufgefunden werden können. Typischerweise ist dabei vorgesehen, dass im Falle einer aufgetretenen Störung, wenn vermutet wird, dass Beschädigungen am Glasfasernetzwerk vorliegen, zu dem Endpunkt der Glasfaserleitung befindlichen Transmitter zusätzlich ein Überprüfungsgerät an das Glasfasernetzwerk angeschlossen wird, mit dem eine Prüfung der Qualität des optischen Kanals möglich ist. Insbesondere können mit einer derartigen aus dem Stand der Technik bekannten Prüfung Diskontinuitäten im betreffenden optischen Kanal aufgefunden werden, die beispielsweise von Kabelbrüchen, schlechten Steckverbindungen oder ähnlichen mechanischen Beeinträchtigungen der Glasfaserleitung herrühren.

Dabei besteht jedoch gerade bei weit verteilten Glasfasernetzen das Problem, dass mit dem zusätzlichen temporären Anschluss eines Prüfgeräts zu dem für die Kommunikation verwendeten Transmitter am Endpunkt des Glasfasernetzes ein erheblicher Arbeitsaufwand verbunden ist.

Aus dem Stand der Technik ist es bekannt, unterschiedliche Transmitter zum Empfangen und Übermitteln von Daten aus einem Glasfasernetzwerk zu verwenden. Die Erfindung macht sich den Umstand zu Nutze, dass eine Vielzahl von Transmittern bereits ohnedies extern modulierte Laser aufweist, die auch für die Prüfung von Diskontinuitäten im optischen Kanal herangezogen werden können.

Die Erfindung sieht dabei ein Verfahren vor, bei dem
- die Referenzfrequenzen der beiden Laser einen vorgegebenen Referenzfrequenzunterschied, insbesondere in einem Bereich von 1 GHz bis 10 GHz, aufweist,
- die optischen Anschlüsse des Elektroabsorptionsmodulators an die beiden Eingänge eines Polarisationsstrahlteilers geführt sind und der Ausgang des Polarisationsstrahlteilers an den optischen Kanal angeschlossen ist,
- ein Testpuls, insbesondere mit einer Länge von 1 bis 10 ns, gleichzeitig an die beiden Elektroabsorptionsmodulatoren angelegt wird und derart während der Zeit des Testpulses Laserlicht von den Lasern durch die jeweiligen Elektroabsorptionsmodulatoren transmittiert wird,
- der Testpuls in zwei, insbesondere gleich lange, Zeitspannen geteilt wird, und während der ersten Zeitspanne die Laser mit ihrer jeweiligen Referenzfrequenz betrieben werden, und während der zweiten Zeitspanne die Emissionsfrequenzen der Laser gegenüber den Referenzfrequenzen, insbesondere durch Modifikation des jeweiligen Laserstroms, vorzugsweise um eine Frequenz von 1 bis 10 GHz, um einen vorgegebenen Verstimmungsfrequenzunterschied verstimmt werden,
- die beiden Elektroabsorptionsmodulatoren nach dem Ende des Testpulses in einen lichtundurchlässigen Zustand versetzt werden, wobei die Elektroabsorptionsmodulatoren von einer Seite von den Lasern mit ihrer jeweiligen Referenzfrequenz beleuchtet werden und gleichzeitig das über den optischen Kanal an einer Diskontinuität reflektierte Licht des Testpulses absorbieren, und
- die beiden Elektroabsorptionsmodulatoren einen dem bei ihnen insgesamt einfallenden Licht entsprechenden Fotostrom an ihrem optischen Anschluss zur Verfügung stellen, und die so ermittelten Fotoströme, gegebenenfalls nach Vornahme einer Filterung und/oder Verstärkung, als charakteristisch für den jeweiligen Kanal angesehen werden.

Die Erfindung löst die Aufgabe mit einer Vorrichtung
- die Referenzfrequenzen der beiden Laser einen vorgegebenen Referenzfrequenzunterschied, insbesondere in einem Bereich von 1 GHz bis 10 GHz, aufweisen,
- die optischen Anschlüsse der Elektroabsorptionsmodulatoren an die beiden Eingänge eines Polarisationsstrahlteilers geführt sind und der Ausgang des Polarisationsstrahlteilers an den optischen Kanal angeschlossen ist,
- wobei die Vorrichtung eine Steuereinheit umfasst, wobei die Steuereinheit einen Pulsgenerator umfasst, der zur Erstellung eines Testpulses an den elektrischen Anschlüssen der beiden Elektroabsorptionsmodulatoren und zum gleichzeitigen Anlegen eines Testpulses, insbesondere mit einer Länge von 1 bis 10 ns, ausgebildet ist, wobei die Steuereinheit dazu ausgebildet ist, den Laserstrom der beiden Laser während der Abgabe des Testpulses derart zu steuern, dass während einer ersten Zeitspanne die Laser mit ihrer jeweiligen Referenzfrequenz betrieben werden und während einer zweiten, insbesondere gleich langen und/oder auf die erste Zeitspanne folgenden oder dieser unmittelbar vorangehenden, zweiten Zeitspanne die Frequenzen der Laser gegenüber den Referenzfrequenzen, vorzugsweise um eine Frequenz von 1 bis 10 GHz, um einen vorgegebenen Verstimmungsfrequenzunterschied verstimmt sind, und
- die Steuereinheit dazu ausgebildet ist, nach dem Ende des Testpulses die Laser bei ihren Referenzfrequenzen weiter zu betreiben und die beiden Elektroabsorptionsmodulatoren in einen absorbierenden Zustand zu versetzen, bei dem die Elektroabsorptionsmodulatoren sowohl das Laserlicht der beiden Laser als auch allenfalls reflektiertes Licht vom optischen Kanal absorbieren und am elektrischen Anschluss einen dem bei ihnen insgesamt einfallenden Licht entsprechenden Fotostrom zur Verfügung stellen,
- die Steuereinheit dazu ausgebildet ist, die elektrischen Anschlüsse der beiden Elektroabsorptionsmodulatoren nach dem Ende des Testpulses zu überwachen.

Eine besonders einfache Variante, mit der am Modulationsanschluss des Elektroabsorptionsmodulators einlangende und ausgehende Signale von einander getrennt übertragen werden können, sieht vor, dass
- am elektrischen Anschluss zumindest eines der Elektroabsorptionsmodulatoren der Common-Anschluss eines Frequenz-Duplexers angeschlossen ist,
- wobei der niederfrequente Anschluss des Frequenz-Duplexers an einen den Testpuls generierenden Pulsgenerator angeschlossen ist, und
- der hochfrequente Anschluss des Frequenz-Duplexers an eine Auswerteeinheit angeschlossen ist oder das charakteristische Signal an diesem Anschluss bereitgestellt anliegt.

Eine besonders vorteilhafte Auswahl der Trennfrequenz des Frequenz-Multiplexers, mit der eine vorteilhafte Unterscheidung der Frequenz möglich ist, sieht vor, dass die Trennfrequenz des Frequenz-Duplexers zwischen den spektralen Anteilen des Testpulses und dem Minimum von Referenzfrequenzunterschied und Verstimmungsfrequenzunterschied gewählt wird.

Um die erfindungsgemäße Schaltung auf einfache Weise und ohne zusätzlichen Serviceaufwand sowohl zur Datenübertragung als auch zur Prüfung des optischen Übertragungskanals nutzen zu können, kann vorgesehen sein, dass zusätzlich eine Übertragungssteuerungseinheit vorgesehen ist, die dazu ausgebildet ist, die Lasereinheiten zur Datenübertragung sowie zum Datenempfang zu veranlassen und, die Übertragungssteuerungseinheit vorzugsweise mit einem weiteren Netzwerk zur Datenübertragung verbunden ist, und
eine Umschalteeinheit vorgesehen ist, die dazu ausgebildet ist, die Ansteuerung der Lasereinheiten durch die Steuereinheit oder durch die Übertragungssteuerungseinheit zu ermöglichen.

Eine bevorzugte Ausführungsform der Erfindung wird anhand der folgenden Zeichnungsfiguren ohne Beschränkung des allgemeinen erfinderischen Gedankens näher dargestellt.

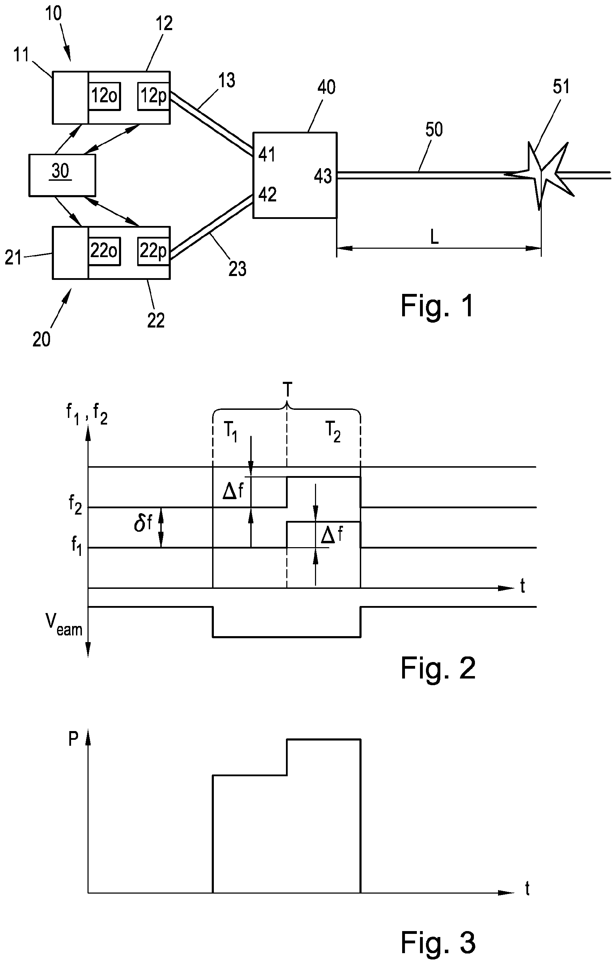

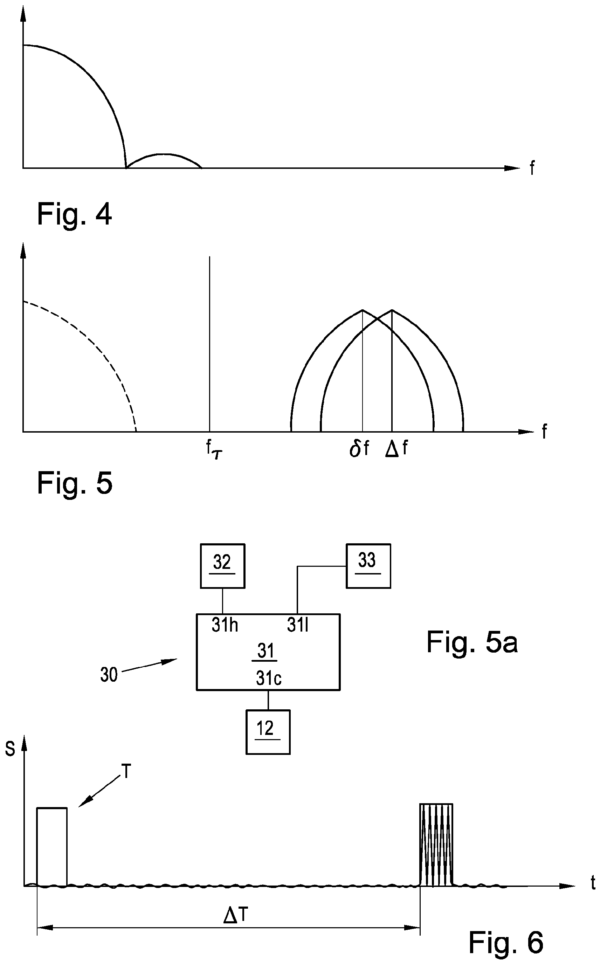

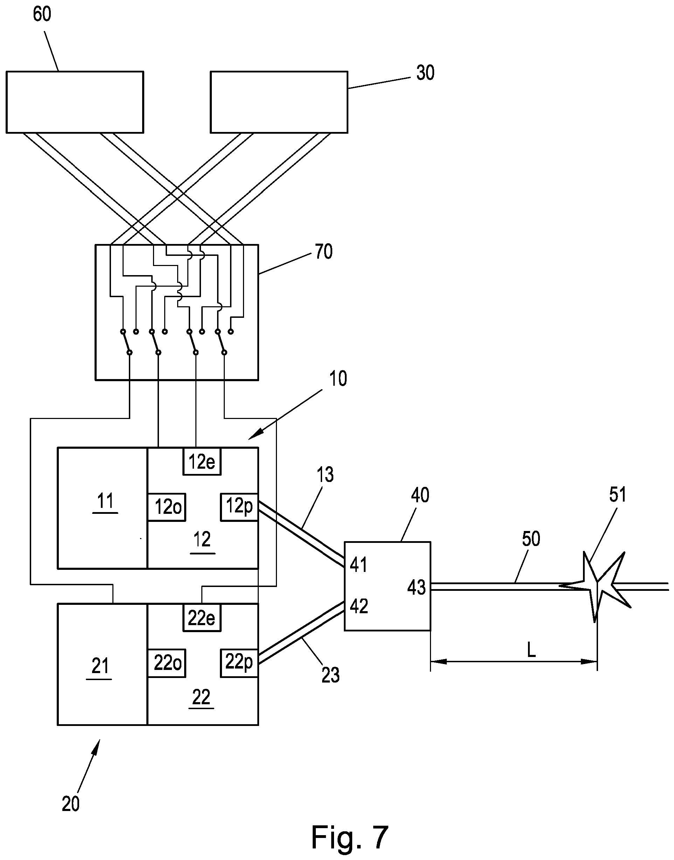

**Fig. 1** zeigt einen Transmitter zur Prüfung von Diskontinuitäten in Leitungen. **Fig. 2** zeigt die Abfolge der Frequenzen zur Erstellung des Pulses, der zur Detektion von Diskontinuitäten eingesetzt wird. **Fig. 3** zeigt den zeitlichen Verlauf der Leistung eines zur Detektion verwendeten Pulses. **Fig. 4 und 5** zeigen einzelne Frequenzanteile im ausgesendeten und empfangenen Laserlicht. **Fig. 5a** zeigt eine mögliche Ansteuerung eines Elektroabsorptionsmodulators mit einem elektrischen Frequenz-Duplexer. **Fig. 6** zeigt schematisch den Zeitverlauf des mittels eines Elektroabsorptionsmodulators empfangenen Signals zwischen dem Absenden des Pulses und der Detektion der Reflexion des Pulses an einer Diskontinuität. **Fig. 7** zeigt eine alternative Vorrichtung, die ein Umschalten zwischen einem Datenübertragungsbetrieb und einem Betrieb zur Detektion von Diskontinuitäten erlaubt.

Zur Bestimmung von optischen Diskontinuitäten 51 im optischen Kanal 50 wird typischerweise eine Lichtlaufzeitmessung verwendet, die auf dem Umstand basiert, dass im Bereich von optischen Diskontinuitäten 51 das von den Lasern übermittelte Licht an diesen zumindest teilweise reflektiert wird.

Um Auswirkungen von polarisationsbedingten Drehungen auf die Messung möglichst auszuschließen, werden zwei Lasereinheiten 10, 20 verwendet, die über einen Polarisationsstrahlteiler 40 miteinander verbunden sind und Laserlicht mit zwei unterschiedlichen Polarisationsrichtungen in den zu untersuchenden optischen Kanal strahlen. In **Fig. 1** sind die beiden Lasereinheiten 10, 20 dargestellt, die jeweils einen Laser 11, 21 sowie einen im Strahlengang des Lasers 11, 21 befindlichen Elektroabsorptionsmodulator 12, 22 aufweisen.

Die optischen Anschlüsse der beiden Elektroabsorptionsmodulatoren 12, 22 sind über optische Verbindungsleitungen 13, 23 an die beiden Eingänge 41, 42 des Polarisationsstrahlteilers 40 angeschlossen. Der Ausgang 43 des Polarisationsstrahlteilers 40 ist an den optischen Kanal 50 angeschlossen.

Zur Detektion von Diskontinuitäten 51 im optischen Kanal 50 wird in weiterer Folge mittels der beiden Lasereinheiten 10, 20 ein Testpuls erstellt. Typischerweise werden die beiden Lasereinheiten 10, 20 von einer Steuereinheit 30 angesteuert, wobei die Steuereinheit 30 für die beiden Laser 11, 21 jeweils einen Laserstrom vorgibt, über den die jeweiligen Laserfrequenzen f₁, f₂ einstellbar sind. Zusätzlich oder alternativ können die Laserfrequenzen f₁, f₂ auch mittels eines Temperaturreglers eingestellt und stabilisiert werden, wodurch die Einstellung der Frequenzen in einem weiteren Bereich möglich ist. Eine solche Regelung der Temperatur kann auch verwendet werden, um Umwelteinflüsse auszuschließen, die beispielsweise vom Drift der Raumtemperatur herrühren.

Anschließend wird das Licht der Laser 11, 21 an den Diskontinuitäten 51 zumindest teilweise reflektiert. Dieser Umstand kann mittels der Elektroabsorptionsmodulatoren 12, 22 festgestellt werden, die die vorteilhafte Eigenschaft aufweisen, dass sie nicht bloß die Regelung ihrer Lichtdurchlässigkeit durch Aufprägen eine Signals an ihrem elektrischen Anschluss erlauben, sondern auch an ihrem elektrischen Anschluss dann eine Spannung bereitstellen, wenn Licht von außen auf den Elektroabsorptionsmodulator trifft.

Besonders vorteilhaft ist es, wenn das an der Diskontinuität 51 reflektierte Licht und das Laserlicht nicht exakt dieselbe Frequenz haben, sondern voneinander um einen vorgegebenen Frequenzwert, der zwischen 1 und 10 GHz liegt, voneinander abweichen. In diesem Fall wird nämlich aufgrund einer quadratischen Detektionskennlinie des Elektroabsorptionsmodulators 12, 22 ein elektrisches Signal erstellt, dessen Frequenz der Differenzfrequenz der beiden Laser 11, 21 entspricht. Würde nämlich für Aussenden und Empfangen dieselbe optische Frequenz verwendet, so würde das vom Elektroabsorptionsmodulator 12, 22 erstellte Überlagerungssignal eine sehr geringe Frequenz aufweisen, insbesondere die Frequenz Null aufweisen, wodurch insgesamt ein sehr hohes elektrisches Rauschen vorhanden wäre. Werden hingegen zur Detektion optische Signale verwendet, die voneinander um bestimmte Frequenzen, beispielsweise im Bereich 1 GHz, abweichen, so entsteht am elektrischen Anschluss des Elektroabsorptionsmodulators 12, 22 ein Modulationssignal im Bereich dieser Differenzfrequenz - auch als Zwischenfrequenz bezeichnet - die den zuvor beschriebenen Rauschstörungen nicht unterliegt und auch in einfacher Weise im elektronischen Bereich konditioniert werden kann.

Die konkrete Erstellung des Testpulses T ist im Detail in **Fig. 2** näher dargestellt. Die beiden Laser 11, 21 senden Licht mit jeweils einer Referenzfrequenzen f₁, f₂ aus, wobei die beiden Referenzfrequenzen f₁, f₂ zueinander einen vorgegebenen Referenzfrequenzunterschied δf aufweisen. Dieser Referenzfrequenzunterschied δf kann typischerweise elektrisch, beispielsweise über eine zentrale Steuereinheit 30 eingestellt werden, und liegt im Bereich zwischen 1 GHz und 10 GHz. In **Fig. 2** ist neben der durch den jeweiligen Laserstrom des Lasers 11, 21 auch die von der Steuereinheit 30 vorgegebene negative Spannung Vₑₐₘ am elektrischen Anschluss der beiden Elektroabsorptionsmodulatoren 12, 22 dargestellt. Der Testpuls T wird, wie in **Fig. 2** dargestellt, in zwei gleich lange Zeitspannen T₁, T₂ geteilt. Die Dauer des Testpulses beträgt dabei typischerweise 1 bis 10 ns. Diese Pulslänge erlaubt bei einer Lichtgeschwindigkeit von etwa 2.10⁸ m/s im optischen Kanal eine räumliche Auflösung der reflektierten Signale von etwa 20 cm bis 2 m.

Nach der Abgabe des Testpulses werden die Frequenzen der Laser 11, 21 auf die Referenzfrequenzen f₁, f₂ zurückgesetzt. Die Spannung am elektrischen Anschluss der beiden Elektroabsorptionsmodulatoren 12, 22 wird auf einen Wert zurückgesetzt, bei dem die beiden Elektroabsorptionsmodulatoren 12, 22 für das Laserlicht nicht mehr durchsichtig sind.

Während der ersten Zeitspanne T₁ werden die beiden Laser 11, 21 mit ihrer jeweiligen Referenzfrequenz f₁, f₂ betrieben. Während der zweiten Zeitspanne T₂ wird mittels der Steuereinheit 30 der Laserstrom der jeweiligen Laser 11, 21 um einen vorgegebenen Verstimmungsfrequenzunterschied Δf modifiziert, im vorliegenden Fall erhöht. Die zeitliche Anordnung der beiden Zeitspannen kann auch vertauscht sein, dh es ist auch möglich, dass die zweite Zeitspanne T₂, in der die Laserfrequenzen verstimmt bzw modifiziert sind, der ersten Zeitspanne T₁ vorangeht.

Wie aus **Fig. 3** ersichtlich, entspricht dabei die am Ausgang der beiden Lasereinheiten 10, 20 ausgehende Lichtleistung etwa dem in **Fig. 3** dargestellten zeitlichen Verlauf. Aufgrund des Laufzeitverhaltens des Lichts kann durch Messung des reflektierten Lichts im Bereich der Lasereinheiten 10, 20 ermittelt werden, an welcher Stelle im optischen Kanal 50 möglicherweise optische Diskontinuitäten 51 vorhanden sind.

Ein wesentliches Problem dieser Messung besteht darin, dass aufgrund der nicht vorhersagbaren Polarisationsdrehung in den optischen Kanälen 50, wie sie insbesondere bei Glasfaserleitungen auftritt, von einem Laser 11, 21 mit einer vorgegebenen Referenzfrequenz erstellte optische Pulse, die mit einer ersten Polarisation in einen optischen Kanal 50 geleitet werden, in diesem optischen Kanal 50 hinsichtlich ihrer Polarisation auf unvorhersehbare Weise verdreht werden und im ungünstigsten Fall anschließend aufgrund des Polarisationsstrahlteilers 40 an die jeweils andere Lasereinheit 10, 20 übermittelt werden. Da im vorliegenden Fall jedoch die beiden Laser 11, 21 jeweils unterschiedliche optische Referenzfrequenzen f₁, f₂ aufweisen, die voneinander um zwischen 1 bis 10 GHz abweichen, kann das reflektierte Signal vom Elektroabsorptionsmodulator 12, 22 nicht bzw nicht im richtigen Frequenzbereich empfangen werden. Grund hierfür ist der Umstand, dass aufgrund des in **Fig. 1** dargestellten Aufbaus der Elektroabsorptionsmodulator 12, 22 sowohl vom jeweiligen Laser 11, 21 als auch vom reflektierten Impuls angeregt wird. Dies bedeutet also, dass die Variation der Polarisation des reflektierten Pulses gegenüber dem abgegebenen Puls zu einer Verschiebung der Empfangsfrequenz führt.

Wird also beispielsweise vom ersten Laser 11 Licht ausgesendet, so erfolgt dies während der ersten Zeitspanne T₁ des Pulses T mit einer Frequenz f₁, und während der zweiten Zeitspanne T₂ des Pulses T mit einer Frequenz f₁ + Δf. Ebenso wird vom zweiten Laser 21 während der ersten Zeitspanne t₁ ein Signal mit der zweiten Referenzfrequenz f₂ abgesandt, und in der zweiten Zeitspanne T₂ wird diese Frequenz auf f₂ + Δf erhöht. Aufgrund der möglichen Polarisationsdrehung dieser Signale im optischen Kanal 50 kann nicht vorhergesagt werden, bei welcher der Lasereinheiten 10, 20 der so erstellte Impuls nach einer erfolgten Reflektion an einer Diskontinuität 51 zurück erhalten wird.

Geht man davon aus, dass die vom Kanal 50 und der optischen Diskontinuität 51 insgesamt bewirkte Polarisationsdrehung Null ist, wird der vom ersten Laser 11 herrührende Anteil des Pulses T an den ersten modulierten Laser 10 zurück übermittelt, und der vom zweiten modulierten Laser 20 herrührende Anteil des Pulses wird an den zweiten modulierten Laser 20 zurück übermittelt und im betreffenden Elektroabsorptionsmodulator 12, 22 mit dem Laserlicht des jeweiligen Lasers 11, 12, dessen Frequenz nach der Abgabe des Pulses wieder auf die Referenzfrequenz f₁, f₂ zurückgestellt wurde, überlagert.

Der zeitlich gesehen erste Teil des Pulses T, der während der Zeitspanne T₁ erstellt wurde, entspricht hinsichtlich seiner Frequenz der Referenzfrequenz f₁, f₂ des jeweiligen Lasers, sodass am Ausgang des Elektroabsorptionsmodulators 12, 22 ein Überlagerungssignal im niederfrequenten Bereich erhalten wird, das starken rauschbedingten Störungen unterliegt und nicht weiter ausgewertet werden kann. Das während der zweiten Zeitspanne T₂ des Pulses T erstellte Licht ist gegenüber dem Licht des jeweiligen Lasers 11, 21, das nach der Erstellung es Pulses T wieder auf die Referenzfrequenz f₁, f₂ zurückgestellt wurde, um den Verstimmungsfrequenzunterschied Δf versetzt, was am elektrischen Anschluss des Elektroabsorptionsmodulators 12, 22 zu einem Spannungssignal im Bereich der durch den Verstimmungsfrequenzunterschied vorgegebenen Frequenz Δf bewirkt. Dieses Signal unterliegt keinen niederfrequenzbedingten Störungen und kann elektrisch einfach weiterverarbeitet werden.

Für den Fall, dass das optische Signal auf seinem Weg durch den optischen Kanal 50 zur Diskontinuität 51 und aufgrund der Reflektion wieder zurück zum Laser hinsichtlich seiner Polarisation verändert wurde und - im ungünstigsten Fall orthogonal vorliegt, langt das von der ersten Lasereinheit 10 erstellte Licht bei der zweiten Lasereinheit 20 ein und das von der zweiten Lasereinheit 20 erstellte Licht jeweils beim ersten Laser 10. In diesem Fall werden die während der ersten Zeitspanne mit der Referenzfrequenz f₁, f₂ erstellten Signale jeweils mit der Referenzfrequenz f₁, f₂ des Lasers des jeweils anderen modulierten Lasers 11, 21 überlagert, sodass zwischen der jeweiligen Laserfrequenz f₁, f₂ und der Frequenz des reflektierten Lichts ein Frequenzunterschied im Bereich des Referenzfrequenzunterschieds δf vorliegt. Da dieser Referenzfrequenzunterschied δf im Bereich von 1 GHz bis 10 GHz liegt, lässt dieser sich vorteilhaft am elektrischen Anschluss des Elektroabsorptionsmodulators 12, 22 der jeweiligen Lasereinheit 10, 20 abgreifen.

In Einzelfällen kann zusätzlich auch das Licht des Pulses T, das während der zweiten Zeitspanne T₂ erstellt wurde, detektiert werden. Im vorliegenden Fall wird das vom ersten Laser mit einer Frequenz f₁ + Δf während der zweiten Zeitspanne T₂ ausgesandte Signal mit dem Lasersignal des zweiten Lasers 21 mit der Referenzfrequenz f₂ = f₁ + δf überlagert, sodass ein elektrisches Ausgangssignal am Ausgang des Elektroabsorptionsmodulators 22 vorliegt, das eine Frequenz von δf - Δf aufweist. Je nach Vorgabe der Frequenzen ist die Frequenz dieses Signals jedoch möglicherweise zu klein, um rauschfrei detektiert zu werden. Insgesamt können diese Signalanteile vernachlässigt werden. Das vom zweiten Laser f₂ mit einer Frequenz f₂ + Δf abgegebene Signal wird am ersten Elektroabsorptionsmodulator 12 mit dem vom ersten Laser 11 erstellten Licht mit einer Frequenz f₁ überlagert. Am Elektroabsorptionsmodulator kann ein Signal im Bereich der einer Zwischenfrequenz von Δf -/+ δf detektiert werden.

Das am elektrischen Anschluss des Elektroabsorptionsmodulators 12, 22 anliegende Signal ist hinsichtlich seines Frequenzverlaufs in den **Fig. 4 und 5** zu unterschiedlichen Zeitpunkten dargestellt.

Dabei zeigt **Fig. 4** den Frequenzverlauf des elektrischen Signals am Eingang des Elektroabsorptionsmodulators 12, 22 zum Zeitpunkt der Erstellung des Impulses. Dabei ist ersichtlich, dass für die Erstellung des Pulses T aufgrund einer externen Anregung der Elektroabsorptionsmodulator 12, 22 durchlässig geschaltet wird, sodass der Puls T über den optischen Kanal 50 abgegeben werden kann.

In **Fig. 5** ist das aufgrund des empfangenen reflektierten Pulses am elektrischen Anschluss des Elektroabsorptionsmodulators 12, 22 erhaltene Signalspektrum bzw mehrere diesbezügliche mögliche Signalspektren dargestellt. Daneben ist zur Veranschaulichung des Frequenzunterschieds zum Sendesignal das Sendesignal strichliert dargestellt. Dabei ist ersichtlich, dass aufgrund der Überlagerung des reflektierten Anteils des Pulses mit dem jeweiligen Licht des Lasers 11, 21 Signale im Bereich der Zwischenfrequenz empfangen werden, die entweder im Bereich des Referenzfrequenzunterschieds δf oder des Verstimmungsfrequenzunterschieds Δf liegen.

Zum einfachen Trennen des einlangenden Signals und des ausgehenden Signals sowie zur Erstellung eines separaten Eingangs und Ausgangs am Elektroabsorptionsmodulator 12, 22 kann am elektrischen Anschluss der Elektroabsorptionsmodulatoren 12, 22 der Common-Anschluss 31c, d.h. der gemeinsame Frequenzanschluss, eines Frequenz-Duplexers 31 angeschlossen sein (Fig. 5a). Der niederfrequente Anschluss 31e des Frequenz-Duplexers 31 wird an einen den Puls T generierenden Pulsgenerator 33 angeschlossen, der der Steuereinheit 30 zugehört und von dieser angesteuert wird. Der hochfrequente Anschluss 31h des Frequenz-Duplexers 31 wird an eine der Steuereinheit 30 zugehörige Auswerteeinheit 32 angeschlossen. Alternativ kann der hochfrequente Anschluss 31h direkt zur weiteren Verarbeitung des reflektierten Signals herangezogen werden. Die Trennfrequenz f_{T} des Frequenz-Duplexers kann dabei vorteilhafterweise im Zwischenbereich zwischen den spektralen Anteilen des Testpulses und dem Minimum von Referenzfrequenzunterschied δf und Verstimmungsfrequenzunterschied Δf gewählt werden.

Im vorliegenden Fall wurde eine Testpulsdauer von 10 ns gewählt, sodass die vom Testpuls ausgehenden Frequenzanteile unter einer Frequenz von 0.2 GHz liegen. Da sowohl von Referenzfrequenzunterschied δf als auch Verstimmungsfrequenzunterschied Δf im Bereich von 10 GHz liegen, kann eine Trennfrequenz des Frequenz-Multiplexers bei etwa 0.5 GHz festgelegt werden.

In **Fig. 6** ist schematisch der zeitliche Verlauf des von des im Elektroabsorptionsmodulator 12, 22 vorherrschenden Lichts dargestellt. Je nach Position der Diskontinuität wird das Licht zu einem unterschiedlichen Zeitpunkt nach der Emission des Pulses T empfangen. Da abhängig von der Polarisationsdrehung die Sensitivität des Pulses T zu unterschiedlichen Zeitpunkten von Relevanz ist, ist die Genauigkeit der Messung durch die Dauer des Pulses T beschränkt. Beträgt also die Lichtgeschwindigkeit im optischen Kanal 50 den Wert 2.10⁸ m/s und die Pulslänge 10 ns, so ergibt sich eine Auflösungsgenauigkeit von 200 cm. Aufgrund des ermittelten Zeitpunkts, zu dem die Reflexion ermittelt wurde, kann unter Berücksichtigung der Auflösungsgenauigkeit auf den Abstand der Lasereinheiten 10, 20 zur Diskontinuität 51 geschlossen werden.

Eine besonders bevorzugte Ausführung der Erfindung ist in **Fig. 7** näher dargestellt. Dabei sind zwei unterschiedliche Steuereinheiten 30, 60 vorgesehen, wobei die Steuereinheit 30 der im Zusammenhang mit dem vorangehenden Ausführungsbeispiel beschriebenen Steuereinheit 30 entspricht und eine die andere Steuereinheit als Übertragungssteuereinheit 60 fungiert, die dazu ausgebildet ist, die Elektroabsorptionsmodulatoren 12, 22 zur Abgabe von Datenübertragungssignalen zu veranlassen sowie empfangene Signale am elektrischen Anschluss des Elektroabsorptionsmodulators 12, 22 zu detektieren. Grundsätzlich ist auch diese Übertragungssteuerungseinheit 60 dazu ausgebildet, den Laserstrom der beiden Laser 11, 21 zu modifizieren, sofern dies für die Datenübertragung erforderlich sein sollte.

Sowohl die Steuereinheit 30 als auch die Übertragungssteuerungseinheit 60 weisen somit einen Steueranschluss zur Steuerung des Laserstroms, sowie einen Ausgang zum Anschluss an den elektrischen Anschluss des Elektroabsorptionsmodulators 12, 22 auf.

Die jeweiligen Anschlüsse der Steuereinheit 30 bzw. der Übertragungssteuerungseinheit 60 werden an eine Umschalteinheit 70 weitergeleitet, die es ermöglicht, an die beiden Lasereinheiten 10, 20 entweder die Steuereinheit 30 oder die Übertragungssteuerungseinheit 60 anzuschließen um abwechselnd in einem beliebigen Taktverhältnis beide Funktionen ohne Wechsel der opto-elektronischen Hardware ausführen zu können. Die Übertragungssteuerungseinheit 60 kann typischerweise mit einem Digitalrechner, Telefon, Antenne oder einem ähnlichen Gerät verbunden sein.

## Patentansprüche

1. Verfahren zur Detektion von Diskontinuitäten (51) in einem optischen Kanal (50), insbesondere bei einer Glasfaserleitung,
- mit zwei Lasereinheiten (10, 20), jeweils umfassend einen Laser (11, 21) und einen Elektroabsorptionsmodulator (12, 22),
- wobei die Referenzfrequenzen (f₁, f₂) der beiden Laser (11, 21) einen vorgegebenen Referenzfrequenzunterschied (δf), insbesondere in einem Bereich von 1 GHz bis 10 GHz, aufweist,
- wobei die optischen Anschlüsse (120, 12p; 220, 22p) des Elektroabsorptionsmodulators (12, 22) an die beiden Eingänge (41, 42) eines Polarisationsstrahlteilers (40) geführt sind und der Ausgang (43) des Polarisationsstrahlteilers (40) an den optischen Kanal (50) angeschlossen ist,
- wobei ein Testpuls (T), insbesondere mit einer Länge von 1 bis 10 ns, gleichzeitig an die beiden Elektroabsorptionsmodulatoren (12, 22) angelegt wird und derart während der Zeit des Testpulses (T) Laserlicht von den Lasern (11, 21) durch die jeweiligen Elektroabsorptionsmodulatoren (12, 22) transmittiert wird,
- wobei der Testpuls (T) in zwei, insbesondere gleich lange, Zeitspannen (T₁, T₂) geteilt wird, und während der ersten Zeitspanne (T₁) die Laser (11, 21) mit ihrer jeweiligen Referenzfrequenz (f₁, f₂) betrieben werden, und während der zweiten Zeitspanne (T₂) die Emissionsfrequenzen der Laser gegenüber den Referenzfrequenzen, insbesondere durch Modifikation des jeweiligen Laserstroms, vorzugsweise um eine Frequenz von 1 bis 10 GHz, um einen vorgegebenen Verstimmungsfrequenzunterschied (Δf) verstimmt werden,
- wobei die beiden Elektroabsorptionsmodulatoren (12, 22) nach dem Ende des Testpulses (T) in einen lichtundurchlässigen Zustand versetzt werden, wobei die Elektroabsorptionsmodulatoren (12, 22) von einer Seite von den Lasern (11, 21) mit ihrer jeweiligen Referenzfrequenz (f₁, f₂) beleuchtet werden und gleichzeitig das über den optischen Kanal (50) an einer Diskontinuität (51) reflektierte Licht des Testpulses (T) absorbieren, und
- wobei die beiden Elektroabsorptionsmodulatoren (12, 22) einen dem bei ihnen insgesamt einfallenden Licht entsprechenden Fotostrom an ihrem optischen Anschluss (120, 12p; 220, 22p) zur Verfügung stellen, und die so ermittelten Fotoströme, gegebenenfalls nach Vornahme einer Filterung und/oder Verstärkung, als charakteristisch für den jeweiligen Kanal angesehen werden.

2. Vorrichtung zur Detektion von Diskontinuitäten (51) in einem optischen Kanal (50), insbesondere einer Glasfaserleitung,
- mit zwei Lasereinheiten (10, 20), jeweils umfassend einen Laser (11, 21) und einen Elektroabsorptionsmodulator (12, 22),
- wobei die Referenzfrequenzen (f₁, f₂) der beiden Laser (11, 21) einen vorgegebenen Referenzfrequenzunterschied (δf), insbesondere in einem Bereich von 1 GHz bis 10 GHz, aufweisen,
- wobei die optischen Anschlüsse (120, 12p; 220, 22p) der Elektroabsorptionsmodulatoren (12, 22) an die beiden Eingänge (41, 42) eines Polarisationsstrahlteilers (40) geführt sind und der Ausgang (43) des Polarisationsstrahlteilers an den optischen Kanal (50) angeschlossen ist,
- wobei die Vorrichtung eine Steuereinheit (30) umfasst, wobei die Steuereinheit (30) einen Pulsgenerator umfasst, der zur Erstellung eines Testpulses an den elektrischen Anschlüssen (12e; 22e) der beiden Elektroabsorptionsmodulatoren (12, 22) und zum gleichzeitigen Anlegen eines Testpulses, insbesondere mit einer Länge von 1 bis 10 ns, ausgebildet ist, wobei die Steuereinheit (30) dazu ausgebildet ist, den Laserstrom der beiden Laser (11, 21) während der Abgabe des Testpulses (T) derart zu steuern, dass während einer ersten Zeitspanne (T₁) die Laser (11, 21) mit ihrer jeweiligen Referenzfrequenz (f₁, f₂) betrieben werden und während einer zweiten, insbesondere gleich langen und/oder auf die erste Zeitspanne (T₁) folgenden oder dieser unmittelbar vorangehenden, zweiten Zeitspanne (T₂) die Frequenzen der Laser (11, 21) gegenüber den Referenzfrequenzen (f₁, f₂), vorzugsweise um eine Frequenz von 1 bis 10 GHz, um einen vorgegebenen Verstimmungsfrequenzunterschied (Δf) verstimmt sind, und
- wobei die Steuereinheit (30) dazu ausgebildet ist, nach dem Ende des Testpulses die Laser (11, 21) bei ihren Referenzfrequenzen (f₁, f₂) weiter zu betreiben und die beiden Elektroabsorptionsmodulatoren (12, 22) in einen absorbierenden Zustand zu versetzen, bei dem die Elektroabsorptionsmodulatoren (12, 22) sowohl das Laserlicht der beiden Laser (11, 21) als auch reflektiertes Licht vom optischen Kanal (50) absorbieren und am elektrischen Anschluss einen dem bei ihnen insgesamt einfallenden Licht entsprechenden Fotostrom zur Verfügung stellen,
- wobei die Steuereinheit (30) dazu ausgebildet ist, die elektrischen Anschlüsse (12e; 22e) der beiden Elektroabsorptionsmodulatoren (12, 22) nach dem Ende des Testpulses (T) zu überwachen.

3. Vorrichtung nach Anspruch 2,
- wobei am elektrischen Anschluss zumindest eines der Elektroabsorptionsmodulatoren (12, 22) der Common-Anschluss (31c) eines Frequenz-Duplexers (31) angeschlossen ist,
- wobei der niederfrequente Anschluss (31l) des Frequenz-Duplexers (31) an einen den Testpuls (T) generierenden Pulsgenerator (33) angeschlossen ist, und
- wobei der hochfrequente Anschluss (31h) des Frequenz-Duplexers (31) an eine Auswerteeinheit (32) angeschlossen ist oder das charakteristische Signal am hochfrequenten Anschluss (31h) bereitgestellt anliegt.

4. Vorrichtung nach Anspruch 3, wobei die Trennfrequenz des Frequenz-Duplexers zwischen den spektralen Anteilen des Testpulses (T) und dem Minimum von Referenzfrequenzunterschied (δf) und Verstimmungsfrequenzunterschied (Δf) gewählt wird.

5. Vorrichtung nach einem der Ansprüche 2 bis 4, wobei zusätzlich eine Übertragungssteuerungseinheit (60) vorgesehen ist, die dazu ausgebildet ist, die Lasereinheiten (10, 20) zur Datenübertragung sowie zum Datenempfang zu veranlassen und, wobei die Übertragungssteuerungseinheit (60) vorzugsweise mit einem weiteren Netzwerk zur Datenübertragung verbunden ist, und
wobei eine Umschalteeinheit (70) vorgesehen ist, die dazu ausgebildet ist, die Ansteuerung der Lasereinheiten (10, 20) durch die Steuereinheit (30) oder durch die Übertragungssteuerungseinheit (60) zu ermöglichen.

## Claims

1. Method for detecting discontinuities (51) in an optical channel (50), in particular in a fibre optic cable,
- having two laser units (10, 20), each comprising a laser (11, 21) and an electroabsorption modulator (12, 22),
- wherein the reference frequencies (f₁, f₂) of the two lasers (11, 21) has a predetermined reference frequency difference (δf), in particular in a range from 1 GHz to 10 GHz,
- wherein the optical ports (120, 12p; 220, 22p) of the electroabsorption modulator (12, 22) are guided to the two inputs (41, 42) of a polarisation beam splitter (40) and the output (43) of the polarisation beam splitter (40) is connected to the optical channel (50),
- wherein a test pulse (T), in particular with a length of 1 to 10 ns, is applied simultaneously to the two electroabsorption modulators (12, 22) and, in such a way, during the time of the test pulse (T) laser light from the lasers (11, 21) is transmitted through the respective electroabsorption modulators (12, 22),
- wherein the test pulse (T) is divided into two, in particular equally long, time periods (T₁, T₂), and during the first time period (T₁) the lasers (11, 21) are operated at their respective reference frequency (f₁, f₂), and during the second time period (T₂) the emission frequencies of the lasers are detuned relative to the reference frequencies, in particular by modification of the respective laser current, preferably by a frequency of 1 to 10 GHz, by a predetermined detuning frequency difference (Δf),
- wherein the two electroabsorption modulators (12, 22) are switched to an opaque state after the end of the test pulse (T), wherein the electroabsorption modulators (12, 22) are illuminated from one side by the lasers (11, 22) at their respective reference frequency (f₁, f₂) and simultaneously absorb the light of the test pulse (T) reflected via the optical channel (50) at a discontinuity (51), and
- wherein the two electroabsorption modulators (12, 22) make available at their optical port (120, 12p; 220, 22p) a photocurrent corresponding to the total light incident on them, and the photocurrents thus determined, optionally after filtering and/or amplification, are considered characteristic of the respective channel.

2. Device for detecting discontinuities (51) in an optical channel (50), in particular a fibre optic cable,
- having two laser units (10, 20), each comprising a laser (11, 21) and an electroabsorption modulator (12, 22),
- wherein the reference frequencies (f₁, f₂) of the two lasers (11, 21) have a predetermined reference frequency difference (δf), in particular in a range from 1 GHz to 10 GHz,
- wherein the optical ports (120, 12p; 220, 22p) of the electroabsorption modulators (12, 22) are guided to the two inputs (41, 42) of a polarisation beam splitter (40) and the output (43) of the polarisation beam splitter (40) is connected to the optical channel (50),
- wherein the device comprises a control unit (30), wherein the control unit (30) comprises a pulse generator which is designed to generate a test pulse at the electrical ports (12e; 22e) of the two electroabsorption modulators (12, 22) and to simultaneously apply a test pulse, in particular with a length of 1 to 10 ns, wherein the control unit (30) is designed to control the laser current of the two lasers (11, 21) during the emission of the test pulse (T) in such a way that during a first time period (T₁) the lasers (11, 21) are operated at their respective reference frequency (f₁, f₂) and during a second time period (T₂), which is in particular equally long and/or follows or immediately precedes the first time period (T₁), the frequencies of the lasers (11, 21) are detuned relative to the reference frequencies (f₁, f₂), preferably by a frequency of 1 to 10 GHz, by a predetermined detuning frequency difference (Δf), and
- wherein the control unit (30) is designed to continue to operate the lasers (11, 21) at their reference frequencies (f₁, f₂) after the end of the test pulse and to switch the two electroabsorption modulators (12, 22) to an absorbing state in which the electroabsorption modulators (12, 22) absorb both the laser light of the two lasers (11, 21) and any reflected light from the optical channel (50) and make available at the electrical port a photocurrent corresponding to the total light incident on them,
- wherein the control unit (30) is designed to monitor the electrical ports (12e; 22e) of the two electroabsorption modulators (12, 22) after the end of the test pulse (T).

3. Device according to claim 2,
- wherein the common port (31c) of a frequency duplexer (31) is connected to the electrical port of at least one of the electroabsorption modulators (12, 22),
- wherein the low-frequency port (311) of the frequency duplexer (31) is connected to a pulse generator (33) generating the test pulse (T), and
- wherein the high-frequency port (31h) of the frequency duplexer (31) is connected to an evaluation unit (32) or the characteristic signal is provided at the high-frequency port (31h).

4. Device according to claim 3, wherein the crossover frequency of the frequency duplexer is selected from among the spectral components of the test pulse (T) and the minimum of the reference frequency difference (δf) and the detuning frequency difference (Δf).

5. Device according to any of claims 2 to 4, wherein a transmission control unit (60) is additionally provided which is designed to cause the laser units (10, 20) to transmit data as well as to receive data and wherein the transmission control unit (60) is preferably connected to a further network for data transmission, and
wherein a switching unit (70) is provided which is designed to enable the control unit (30) or the transmission control unit (60) to control the laser units (10, 20).

## Revendications

1. Procédé de détection de discontinuités (51) dans un canal optique (50), en particulier dans une conduite en fibre de verre,
- avec deux unités laser (10, 20), comprenant respectivement un laser (11, 21) et un modulateur à électroabsorption (12, 22),
- dans lequel les fréquences de référence (f₁, f₂) des deux lasers (11, 21) présentent une différence de fréquence de référence prédéterminée (δf), en particulier dans une plage de 1 GHz à 10 GHz,
- dans lequel les connexions optiques (120, 12p ; 220, 22p) du modulateur à électroabsorption (12, 22) sont acheminés aux deux entrées (41,42) d'un diviseur de faisceau à polarisation (40) et la sortie (43) du diviseur de faisceau à polarisation (40) est connectée au canal optique (50),
- dans lequel une impulsion d'essai (T), en particulier d'une durée de 1 à 10 ns, est appliquée simultanément aux deux modulateurs à électroabsorption (12, 22) et ainsi, de la lumière laser est transmise par les lasers (11, 21) à travers les modulateurs à électroabsorption respectifs (12, 22) pendant le temps de l'impulsion d'essai (T),
- dans lequel l'impulsion d'essai (T) est divisée en deux périodes de temps (T₁, T₂), en particulier de même durée, et pendant la première période de temps (T₁), les lasers (11, 21) sont exploités à leur fréquence de référence respective (f₁, f₂), et pendant la seconde période de temps (T₂), les fréquences d'émission des lasers sont désaccordées par rapport aux fréquences de référence, en particulier par modification du courant laser respectif, de préférence par une fréquence de 1 à 10 GHz, selon une différence de fréquence de désaccord prédéterminée (Δf),
- dans lequel les deux modulateurs à électroabsorption (12, 22) sont déplacés dans un état opaque après la fin de l'impulsion d'essai (T), dans lequel les modulateurs à électroabsorption (12, 22) sont éclairés d'un côté par les lasers (11, 21) à leur fréquence de référence respective (f₁, f₂) et absorbent simultanément la lumière de l'impulsion d'essai (T) réfléchie au niveau d'une discontinuité (51) via le canal optique (50), et
- dans lequel les deux modulateurs à électroabsorption (12, 22) mettent à disposition, au niveau de leur connexion optique (120, 12p ; 220, 22p), un courant photoélectrique correspondant à l'ensemble de la lumière incidente sur ceux-ci, et les courants photoélectriques ainsi déterminés, le cas échéant après processus de filtrage et/ou d'amplification, sont considérés comme caractéristiques pour le canal respectif.

2. Dispositif de détection de discontinuités (51) dans un canal optique (50), en particulier une conduite en fibre de verre,
- avec deux unités laser (10, 20), comprenant respectivement un laser (11, 21) et un modulateur à électroabsorption (12, 22),
- dans lequel les fréquences de référence (f₁, f₂) des deux lasers (11, 21) présentent une différence de fréquence de référence prédéterminée (δf), en particulier dans une plage de 1 GHz à 10 GHz,
- dans lequel les connexions optiques (120, 12p ; 22o, 22p) des modulateurs à électroabsorption (12, 22) sont acheminés aux deux entrées (41,42) d'un diviseur de faisceau à polarisation (40) et la sortie (43) du diviseur de faisceau à polarisation est connectée au canal optique (50),
- dans lequel le dispositif comprend une unité de commande (30), l'unité de commande (30) comprenant un générateur d'impulsions, qui est réalisé pour générer une impulsion d'essai au niveau des connexions électriques (12e ; 22e) des deux modulateurs à électroabsorption (12, 22) et pour appliquer simultanément une impulsion d'essai, en particulier d'une durée de 1 à 10 ns, dans lequel l'unité de commande (30) est réalisée de manière à commander le courant laser des deux lasers (11, 21) pendant l'émission de l'impulsion d'essai (T) de sorte que pendant une première période de temps (T₁), les lasers (11, 21) sont exploités à leur fréquence de référence respective (f₁, f₂) et, pendant une seconde période de temps (T₂), en particulier de même durée et/ou suivant ou précédant immédiatement la première période de temps (T₁), les fréquences des lasers (11, 21) sont désaccordées par rapport aux fréquences de référence (f1, f2), de préférence par une fréquence de 1 à 10 GHz, selon une différence de fréquence de désaccord prédéterminée (Δf), et
- dans lequel l'unité de commande (30) est réalisée pour continuer à exploiter les lasers (11, 21) à leurs fréquences de référence (f₁, f₂) après la fin de l'impulsion d'essai et pour déplacer les deux modulateurs à électroabsorption (12, 22) dans un état d'absorption dans lequel les modulateurs à électroabsorption (12, 22) absorbent à la fois la lumière laser des deux lasers (11, 21) et la lumière réfléchie par le canal optique (50) et mettent à disposition, au niveau de la connexion électrique, un courant photoélectrique correspondant à l'ensemble de la lumière incidente sur ceux-ci,
- dans lequel l'unité de commande (30) est réalisée pour surveiller les connexions électriques (12e ; 22e) des deux modulateurs à électroabsorption (12, 22) après la fin de l'impulsion d'essai (T).

3. Dispositif selon la revendication 2,
- dans lequel la connexion commune (31c) d'un duplexeur de fréquence (31) est connectée à la connexion électrique d'au moins un des modulateurs à électroabsorption (12, 22),
- dans lequel la connexion basse fréquence (311) du duplexeur de fréquence (31) est connectée à un générateur d'impulsions (33) générant l'impulsion d'essai (T), et
- dans lequel la connexion haute fréquence (31h) du duplexeur de fréquence (31) est connectée à une unité d'évaluation (32) ou le signal caractéristique est appliqué de manière préparée à la connexion haute fréquence (31h).

4. Dispositif selon la revendication 3, dans lequel la fréquence de coupure du duplexeur de fréquence est choisie entre les composantes spectrales de l'impulsion d'essai (T) et le minimum de la différence de fréquence de référence (δf) et de la différence de fréquence de désaccord (Δf).

5. Dispositif selon l'une quelconque des revendications 2 à 4, dans lequel une unité de commande de transmission (60) est en outre prévue, laquelle est réalisée pour amener les unités laser (10, 20) à transmettre des données ainsi qu'à recevoir des données et, dans lequel l'unité de commande de transmission (60) est de préférence reliée à un autre réseau pour la transmission de données, et
dans lequel une unité de commutation (70) est prévue, laquelle est réalisée pour permettre l'activation des unités laser (10, 20) par l'unité de commande (30) ou par l'unité de commande de transmission (60).
